(19)

Europäisches
Patentamt
European
Patent Office
Office européen
des brevets

(11)     **EP 2 407 305 A1**

(12)     **EUROPEAN PATENT APPLICATION**
published in accordance with Art. 153(4) EPC

(43) Date of publication:
**18.01.2012   Bulletin 2012/03**

(21) Application number: **10750669.3**

(22) Date of filing: **23.02.2010**

(51) Int Cl.:
**B32B 27/36** [(2006.01)]      **C08L 67/02** [(2006.01)]
**C08L 67/04** [(2006.01)]      **C08L 101/16** [(2006.01)]

(86) International application number:
**PCT/JP2010/052708**

(87) International publication number:
**WO 2010/103915 (16.09.2010 Gazette 2010/37)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **12.03.2009   JP 2009059134**

(71) Applicant: **Toray Industries, Inc.**
**Tokyo 103-8666 (JP)**

(72) Inventors:
 • **TABATA, Hisataka**
   **Otsu-shi**
   **Shiga 520-8558 (JP)**
 • **MATSUMOTO, Taisei**
   **Otsu-shi**
   **Shiga 520-8558 (JP)**

(74) Representative: **Prüfer & Partner GbR**
**European Patent Attorneys**
**Sohnckestraße 12**
**81479 München (DE)**

(54)     **POLYLACTIC ACID-BASED MULTILAYER SHEET**

(57)     Disclosed is a multilayer sheet which is composed of at least three layers, wherein a layer A forms at least one outermost layer and a layer B forms an inner layer. The layer A contains a polylactic acid and a polybutylene succinate resin. When the total mass of the components of the layer A is taken as 100% by mass, the polylactic acid is contained in an amount of not less than 60% by mass but not more than 97.5% by mass. When the total thickness of the multilayer sheet is taken as 100%, the ratio (Xa) of the thickness of the layer A is 10-40%. The layer B contains a polylactic acid and a polybutylene succinate resin. When the total mass of the components of the layer B is taken as 100% by mass, the polylactic acid is contained in an amount of 90% by mass or more but less than 100% by mass. The multilayer sheet has a plane orientation degree ($\Delta$P) of not less than 0 but not more than 0.002.

EP 2 407 305 A1

**Description**

TECHNICAL FIELD

The present invention relates to a polylactic acid-based multilayer sheet excellent in impact resistance, blocking resistance and rule bendability and especially suitable for forming articles and printing.

BACKGROUND ART

In recent years, the global warming issue caused by the increase of carbon dioxide gas emissions in air is a prominent problem in the world, and in various industrial fields, techniques for decreasing the carbon dioxide gas emissions in air are actively developed. In the field of plastic products, plastics produced from general-purpose petroleum-derived materials are incinerated after consumption, to emit carbon dioxide gas into air. In recent years, plastics as materials derived from the plants living on the carbon source in air (carbon dioxide gas) attract attention. Above all, R&D is being aggressively conducted for the practical application of polylactic acids excellent in transparency and relatively advantageous in view of cost.

Patent Document 1 discloses a film or sheet comprising a polylactic acid-based resin and a biodegradable aliphatic polyester with a glass transition point Tg of 0°C or lower. Further, Patent Documents 2 and 3 disclose multilayer films. Furthermore, Patent Document 4 discloses a multilayer sheet or film.

Patent Document 1: JP 9-111107 A
Patent Document 2: JP 2004-2776 A
Patent Document 3: JP 2003-170560 A
Patent Document 4: JP 2006-305992 A

DISCLOSURE OF THE INVENTION

PROBLEMS TO BE SOLVED BY THE INVENTION

As described before, Patent Document 1 discloses a film or sheet comprising a polylactic acid-based resin and a biodegradable aliphatic polyester with a glass transition point Tg of 0°C or lower. However, this document does not refer to the use of multiple layers, and since the starting materials are merely mixed, the film or sheet has a problem that sufficient transparency cannot be obtained.

Further, as described before, Patent Documents 2 and 3 disclose multilayer films. However, since the films are stretched films, the films have a problem that they are not suitable for three-dimensional forming.

Furthermore, Patent Document 4 discloses a multilayer film, but the film does not have sufficient impact resistance, since the intermediate layer of the three-layer configuration consists of a 100% polylactic acid.

As described above, a polylactic acid-based multilayer sheet excellent in impact resistance, transparency and blocking resistance and especially suitable for both forming articles and printing.

In view of the prior art background as described above, this invention provides a polylactic acid-based multilayer sheet excellent in impact resistance, blocking resistance and rule bendability and especially suitable for printing. Further, in addition to the aforementioned task, this invention provides a multilayer sheet having transparency or whiteness.

MEANS FOR SOLVING THE PROBLEM

This invention employs the following means for solving the abovementioned problems.

(1) A multilayer sheet comprising at least three layers, including a layer A as at least one of the outermost layers and a layer B as an inner layer, in which
the layer A contains a polylactic acid and a polybutylene succinate-based resin, wherein the polylactic acid is contained by 60 mass% to 97.5 mass% with all the components of the layer A as 100 mass% (hereinafter the mass percentage of the polylactic acid with all the components of the layer A as 100 mass% is referred to as "Pa"), and the rate Xa of the thickness of the layer A is 10 to 40% with the entire thickness of the multilayer sheet as 100%;
the layer B contains a polylactic acid and a polybutylene succinate-based resin, wherein the polylactic acid is contained by 90 mass% to less than 100 mass% with all the components of the layer B as 100 mass% (hereinafter the mass percentage of the polylactic acid with all the components of the layer B as 100 mass% is referred to as "Pb"); and
the plane orientation degree $\Delta P$ is 0 to 0.002.

(2) A multilayer sheet, according to the aforementioned (1), wherein the aforementioned Pb is larger than the aforementioned Pa.

(3) A multilayer sheet, according to the aforementioned (1) or (2), wherein the two-dimensional center line average roughness Ra of the surface of the aforementioned layer A is 0.1 $\mu$m to 0.6 $\mu$m.

(4) A multilayer sheet, according to any one of the aforementioned (1) through (3), wherein the haze Ha (%) is 1% to 15%.

(5) A multilayer sheet, according to any one of the aforementioned (1) through (3), wherein the whiteness degree is 80% or more.

(6) A formed article composed of the multilayer sheet as set froth in any one of the aforementioned (1) through (5).

EFFECTS OF THE INVENTION

This invention provides a polylactic acid-based multilayer sheet excellent in impact resistance, blocking resistance and rule bendability and especially suitable for printing. Further, in a preferred mode of this invention, the multilayer sheet can also be made to have transparency or whiteness in response to the application thereof. The multilayer sheet of this invention can be used to provide a formed article low in environmental load, without impairing the impact resistance, formability and printability of the conventional petroleum-based resin sheets.

THE BEST MODES FOR CARRYING OUT THE INVENTION

The polylactic acid-based multilayer sheet of this invention is explained below. Meanwhile, the following term "sheet" is used to mean a two-dimensional structure such as a film or plate, and the following term "formed article" is used to mean a three-dimensional structure such as a container, print or card obtained by processing the aforementioned sheet.

The multilayer sheet of this invention is a multilayer sheet consisting of at least three layers, including a layer A as at least one of the outermost layers and a layer B as an inner layer. The layer A can be formed as each of both the outermost layers or as one of the outermost layers. In the most preferred mode, both the outermost layers are layers A. The layer B is not especially limited, if it is an inner layer. For example, if the multilayer sheet consists of three layers, the layer B is positioned at the center, and if the multilayer sheet consists of five layers, the layer B can be positioned as a layer other than the outermost layers. The number of the layers of the multilayer sheet is not especially limited if the layer A is provided at least as one of the outermost layers while the layer B is provided as an inner layer. However, 3 layers to 8 layers are preferred, and 3 layers to 5 layers are more preferred. A multilayer sheet consisting of three layers with layer A/layer B/layer A in this order is especially preferred.

In the multilayer sheet of this invention, in the case where the layer A containing specific amounts of a polylactic acid and a polybutylene succinate-based resin is provided as at least one of the outermost layers, when impact is applied to the layer A side, the propagation of the impact into the sheet can be dampened, and as a result, an effect of enhancing the impact resistance of the entire multilayer sheet can be obtained. Accordingly it is important that the layer A is disposed as at least one of the outermost layers of the multilayer sheet, and further when the multilayer sheet of this invention is processed, it is preferred that the processing is made in such a manner that any impact may be applied to the layer A side. Meanwhile, in the case where layers A are disposed as both the outermost layers of the multilayer sheet, when the multilayer sheet of this invention is processed, the sheet can be placed without paying attention to the sides of the sheet. Consequently it is preferred that the multilayer sheet of this invention has layers A as both the outermost layers.

Furthermore, even a single-layer sheet containing a polylactic acid and a polybutylene succinate-based resin can have impact resistance equivalent to that of the multilayer sheet of this invention. However, the multilayer sheet of this invention having impact resistance equivalent to that of the single-layer sheet can contain a larger amount of the polylactic acid in the entire sheet than the single-layer sheet. For this reason, the multilayer sheet of this invention has a more excellent property in view of plant degree than the single-layer sheet with equivalent impact resistance. Therefore, it is important that the sheet of this invention has a multilayer configuration.

The abovementioned plant degree refers to the polylactic acid content in the entire sheet.

It is important that the layer A of the multilayer sheet of this invention contains a polylactic acid and a polybutylene succinate-based resin, wherein the polylactic acid is contained by 60 mass% to 97.5 mass% with all the components of the layer A as 100 mass% (meanwhile, hereinafter the mass percentage of the polylactic acid with all the components of the layer A as 100 mass% is referred to as "Pa"; therefore it is important that the layer A of the multilayer sheet of this invention contains a polylactic acid and a polybutylene succinate-based resin, wherein Pa is 60 mass% to 97.5 mass%). If the content of the polylactic acid with all the components of the layer A as 100 mass% is less than 60 mass%, the plant degree declines to lower the advantage of using the polylactic acid. Further, if the content of the polylactic acid with all the components of the layer A as 100 mass% is larger than 97.5 mass%, the impact resistance of the multilayer sheet may decline as the case may be. It is preferred that the content of the polylactic acid with all the components of the layer A as 100 mass% is 80 mass% to 97.5 mass%, since transparency can be obtained additionally while the impact resistance and the plant degree can be kept high. It is more preferred that the content of the polylactic acid with all the components of the layer A as 100 mass% is 90 mass% to 95 mass%.

Moreover, it is important that the layer A of the multilayer sheet of this invention contains a polybutylene succinate-based resin as described before. A polybutylene succinate-based resin has an advantage that it does not greatly impair the transparency of the polylactic acid, since it is relatively good in compatibility with the polylactic acid. If the layer A does not contain a polybutylene succinate-based resin, it is difficult to enhance impact resistance while maintaining the transparency of the polylactic acid and to maintain the biodegradability of the multilayer sheet. It is preferred that the content of the polybutylene succinate-based resin is 2.5 mass% to 20 mass% with all the components of the layer A as 100 mass%, and a more preferred range is 5 mass% to 10 mass%.

Further, the layer A of the multilayer sheet of this invention can contain additives such as an antioxidant, particles and other components described later. It is preferred that the content of these other components is 0.1 mass% to 30 mass% with all the components of the layer A as 100 mass%.

As described before, in the case where the multilayer sheet of this invention has a layer A as at least one of the outermost layers, when impact is applied from the layer A side, the propagation of impact into the sheet can be dampened, and as a result, an effect of enhancing the impact resistance of the entire multilayer sheet can be obtained.

Further, in the multilayer sheet of this invention, it is important that the rate $Xa$ of the thickness of the layer A is 10 to 40% with the thickness of the entire multilayer sheet as 100%. If $Xa$ is larger than 40%, the plant degree of the entire sheet may decline as the case may be and further transparency declines. Moreover, when the sheet is bent, whitening occurs at the bent portion. Further, in the case where the rate $Xa$ of the thickness of the layer A is smaller than 10%, if impact is applied from the layer A side when the multilayer sheet of this invention is processed for example, the effect of dampening the propagation of impact into the sheet cannot be sufficiently obtained, and the effect of enhancing the impact resistance of the entire multilayer sheet cannot be obtained either. A more preferred $Xa$ range is 20 to 30%. Meanwhile, $Xa$ means the rate of the layer A occupying the thickness of the entire multilayer sheet. That is, in the case of a multilayer sheet having three layers of layer A/layer B/layer A in this order, $Xa$ is $Xa(\%) = $ [Total thickness of the two layers A]/[Thickness of the entire sheet] x 100. In the case of a multilayer sheet having three layers of layer A/layer B/a further other layer, $Xa$ is $Xa(\%) = $ [Thickness of the one layer A]/[Thickness of the entire sheet] x 100.

In the multilayer sheet of this invention, in the case where $Xa$ is controlled in a range from 10 to 40%, when impact is applied from the layer A side, the propagation of impact into the sheet can be dampened, and as a result, an effect of enhancing the impact resistance of the entire multilayer sheet can be obtained.

Further, it is important the layer B of the multilayer sheet of this invention contains a polylactic acid and a polybutylene succinate-based resin, wherein the content of the polylactic acid with all the components of the layer B as 100 mass% is 90 mass% to less than 100 mass% (meanwhile, hereinafter the mass percentage of the polylactic acid with all the components of the layer B as 100 mass% is referred to as "Pb"; therefore it is important that the layer B of the multilayer sheet of this invention contains a polylactic acid and a polybutylene succinate-based resin, wherein Pb is 90 mass% to less than 100 mass%). If the content of the polylactic acid with all the components of the layer B as 100 mass% is less than 90 mass%, the plant degree declines to lower the advantage of using the polylactic acid. In the case where no polybutylene succinate-based resin is contained to keep the content of the polylactic acid at 100 mass% with all the components of the layer B as 100 mass%, there arises a problem that the impact resistance of the multilayer sheet declines. It is a preferred mode that the content of the polylactic acid is 95 mass% to less than 100 mass% with all the components of the layer B as 100 mass%, since transparency can be additionally obtained while the impact resistance and the plant degree can be kept high. A more preferred mode is that the content of the polylactic acid is 98 mass% to 99 mass% with all the components of the layer B as 100 mass%.

In the case where the layer B does not contain a polybutylene succinate-based resin, it is difficult to enhance impact resistance while maintaining the transparency of the polylactic acid and to maintain the biodegradability of the multilayer sheet. Accordingly it is important that the layer B contains a polybutylene succinate-based resin, and it is preferred that the content of the polybutylene succinate-based resin of the layer B is more than 0 mass% to 5 mass% with all the components of the layer B as 100 mass%. A more preferred range is 1 mass% to 2 mass%.

Further, the layer B of the multilayer sheet of this invention can contain additives such as an antioxidant, particles and other components described later. It is preferred that the content of these other components is 0.1 mass% to less than 10 mass% with all the components of the layer B as 100 mass%.

As described before, in the multilayer sheet of this invention, in the case where the layer A provided as at least one of the outermost layers, if impact is applied from the layer A side, there is an effect of dampening the propagation of impact into the sheet. If the layer B is further provided as an inner layer, the impact propagating from the layer A as the outermost layer into the sheet can be dampened by the layer B, and as a result, an effect of enhancing the impact resistance of the entire multilayer sheet can be obtained.

It is important that the plane orientation degree $\Delta P$ of the multilayer sheet of this invention is 0 to 0.002. In the case where an oriented sheet, i.e., a multilayer sheet with a plane orientation degree $\Delta P$ of more than 0.002 is used for forming an article, particularly for three-dimensional forming by such a forming method as vacuum forming or air-pressure forming, there is a problem that the forming method and conditions are limited to narrow processing conditions. It is more preferred that the plane orientation degree $\Delta P$ is 0.0005 to 0.001.

The method for keeping the plane orientation degree $\Delta P$ of the multilayer sheet in a range from 0 to 0.002 is not especially limited. For example, there is a method of extruding from a T-die and subsequently cooling and solidifying by use of a casting roll of 30 to 40°C or the like. Cold stretching (stretching at a temperature of lower than the melting point) such as biaxial stretching may make the plane orientation degree $\Delta P$ larger than 0.002 as the case may be.

The polylactic acid used in this invention refers to a polylactic acid containing L-lactic acid and/or D-lactic acid as main components, in which the components derived from lactic acids account for 70 mol% to 100 mol% per 100 mol% of all the monomer components constituting the polylactic acid. A lactic acid homopolymer substantially consisting of L-lactic acid and/or D-lactic acid only can be preferably used.

Further, it is preferred that the polylactic acid used in this invention has crystallinity. A polylactic acid having crystallinity is such that in the case where the polylactic acid is sufficiently crystallized with heating and subsequently subjected to differential scanning calorimetric analysis (DSC) in an adequate temperature range, the crystal melting heat owing to polylactic acid components can be observed. Usually a lactic acid homopolymer with a higher optical purity has a higher melting point and higher crystallinity. The melting point and crystallinity of a polylactic acid are affected by the molecular weight and the catalyst used for polymerization. Usually a lactic acid homopolymer with an optical purity of 98% or more has a melting point of approx. 170°C and relatively high crystallinity. Further, if the optical purity declines, the melting point and crystallinity decline. For example, a lactic acid homopolymer with an optical purity of 88% has a melting point of approx. 145°C, and a lactic acid homopolymer with an optical purity of 75% has a melting point of approx. 120°C. A lactic acid homopolymer with an optical purity of lower than 70% does not show a clear melting point and becomes amorphous.

As the polylactic acid used in this invention, depending on the application for which the multilayer sheet is used, a crystalline lactic acid homopolymer and an amorphous lactic acid homopolymer can also be mixed for the purpose of providing or enhancing a necessary function. In this case, the rate of the amorphous lactic acid homopolymer can be decided to such an extent where the effects of this invention are not impaired. Further, in the case where the multilayer sheet is required to have relatively high heat resistance, it is preferred that at least one of the polylactic acids used is a polylactic acid with an optical purity of 95% or more.

The mass-average molecular weight of the polylactic acid used in this invention is usually at least 50,000 or more. A preferred range is 80,000 to 400,000, and a more preferred range is 100,000 to 300,000. Meanwhile, the mass-average molecular weight of a polylactic acid in this invention refers to a molecular weight measured in chloroform solvent by gel permeation chromatography (GPC) and calculated by a polymethyl methacrylate (PMMA) conversion method.

If the mass-average molecular weight of the polylactic acid is at least 50,000, the mechanical properties of the multilayer sheet of this invention containing the polylactic acid can be made excellent. Further, the mechanical properties of the article obtained by processing the multilayer sheet of this invention can also be made excellent.

The polylactic acid used in this invention can also be a lactic acid copolymer obtained by copolymerizing L-lactic acid or D-lactic acid and another monomer component capable of forming an ester. Examples of the copolymerizable monomer component include hydroxycarboxylic acids such as glycolic acid, 3-hydroxybutyric acid, 4-hydroxybutyric acid, 4-hydroxyvaleric acid and 6-hydroxycaproic acid, compounds containing multiple hydroxyl groups in each molecule such as ethylene glycol, propylene glycol, butanediol, neopentyl glycol, polyethylene glycol, glycerol and pentaerythritol, derivatives thereof, compounds containing multiple carboxylic acid groups in each molecule such as succinic acid, adipic acid, sebacic acid, fumaric acid, terephthalic acid, isophthalic acid, 2,6-naphthalenedicarboxylic acid, 5-sodium sulfoisophthalic acid and 5-tetrabutylphosphonium sulfoisophthalic acid, and derivatives thereof. Meanwhile, among the abovementioned copolymer components, it is preferred to select a biodegradable component in response to the application. It is preferred to use any of these copolymer components by 0 mol% to 30 mol% per 100 mol% of all the monomer components constituting the polylactic acid.

The detailed methods for producing a polylactic acid are described later, but a direct polymerization method from lactic acid, ring-opening polymerization method via a lactide, etc. can be used.

The polybutylene succinate-based resin used in the multilayer sheet of this invention is polybutylene succinate or polybutylene succinate/adipate having a large effect of enhancing impact resistance and having good compatibility with a polylactic acid.

It is preferred that the mass-average molecular weight of the polybutylene succinate-based resin used in this invention is 100,000 to 300,000. The mass-average molecular weight of the polybutylene succinate-based resin in this invention is a molecular weight measured in chloroform solvent by gel permeation chromatography (GPC) and calculated by a polystyrene (PS) conversion method.

Examples of the polybutylene succinate-based resin include GsPla FZ91PD (trade name, produced by Mitsubishi Chemical Corporation) and Bionole #3003 (trade name, produced by Showa Highpolymer Co., Ltd.), and a polybutylene succinate can be obtained, for example, by polycondensation of 1,4-butanediol and succinic acid.

The multilayer sheet of this invention can contain various additives such as an antioxidant, ultraviolet stabilizer, coloration-preventing agent, delustering agent, deodorant, flame retardant, anti-weathering agent, antistatic agent, antioxidant, ion-exchange agent, crystal nucleating agent and color pigment, to such an extent that the effects of this invention are not impaired. Further, the multilayer sheet may also contain a lubricant such as inorganic fine particles, organic particles or organic lubricant as required. To exhibit the intended functions effectively, it is preferred that those additives are added to the layer A. A preferred content of them is 0.1 mass% to 30 mass% with all the components of the layer A as 100 mass%.

Examples of the antioxidant include a hindered phenol-based antioxidant, hindered amine-based antioxidant, etc. Examples of the color pigment include inorganic pigments such as carbon black, titanium oxide, zinc oxide and iron oxide, organic pigments such as a cyanine-based pigment, styrene-based pigment, phthalocyanine-based pigment, anthraquinone-based pigment, perinone-based pigment, isoindolinone-based pigment, quinophthalone-based pigment, quinocridone-based pigment and thioindigo-based pigment.

Examples of the inorganic particles include fine particles of silicon oxide such as silica, various carbonates such as calcium carbonate, magnesium carbonate and barium carbonate, various sulfates such as calcium sulfate and barium sulfate, various composite oxides such as kaolin and talc, various phosphates such as lithium phosphate, calcium phosphate and magnesium phosphate, various oxides such as aluminum oxide, titanium oxide and zirconium oxide, and various salts such as lithium fluoride.

Further, examples of the organic particles include fine particles of calcium oxalate and terephthalates of calcium, barium, zinc, manganese, manganese, etc. Examples of crosslinked polymer particles can be fine particles of homopolymers and copolymers of vinyl-based monomers such as divinylbenzene, styrene, acrylic acid and methacrylic acid. Further, organic particles of polytetrafluoroethylene, benzoguanamine resin, thermosetting epoxy resin, unsaturated polyester resin, thermosetting urea resin, thermosetting phenol resin, etc. can also be preferably used.

Examples of the organic lubricant include aliphatic hydrocarbon-based lubricants such as liquid paraffin, natural paraffin, synthetic paraffin and polyethylene, fatty acid-based lubricants such as stearic acid, laurylic acid, hydroxystearic acid and hard castor oil, fatty acid amide-based lubricants such as stearic acid amide, oleic acid amide, erucic acid amide, lauric acid amide and ethylene-bis-stearic acid amide, fatty acid metal salts such as aluminum stearate, lead stearate, calcium stearate and magnesium stearate, polyhydric alcohol fatty acid (partial) ester-based lubricants such as glycerol fatty acid ester and sorbitan fatty acid ester, stearic acid butyl ester, long-chain fatty acid ester-based lubricants such as long-chain ester wax like montan wax, etc. Among them, stearic acid amide and ethylene-bis-stearic acid amide are preferred since the intended effect can be easily obtained with a small amount owing to moderate compatibility with the polylactic acid.

In the multilayer sheet of this invention, it is preferred that Pb is larger than Pa. That is, it is preferred that the mass percentage of the polylactic acid in the layer B with all the components of the layer B as 100 mass% is larger than the mass percentage of the polylactic acid in the layer A with all the components of the layer A as 100 mass%. In the case where Pb is equal to or smaller than Pa, the multilayer sheet as a whole must contain a large amount of a polybutylene succinate-based resin in order to have the impact resistance equivalent to that of the sheet in which Pb is larger than Pa, and there arises such a problem that the multilayer sheet as a whole in which Pb is equal to or smaller than Pa becomes lower in plant degree than the multilayer sheet in which Pb is larger than Pa. For this reason, it is preferred that Pb is larger than Pa in the multilayer sheet of this invention.

In the multilayer sheet of this invention, it is preferred that the two-dimensional center line average roughness Ra of the surface of the layer A is 0.1 $\mu$m to 0.6 $\mu$m. If Ra is less than 0.1 $\mu$m, the multilayer sheets overlaid on each other for a forming process cause blocking between them in the forming process, to cause a feed failure, thus lowering the processing efficiency as the case may be. On the contrary, in the case of a coarse mat multilayer sheet with Ra of more than 0.6 $\mu$m, the article obtained by forming the multilayer sheet declines in the visibility of the content, and fine printing may not be able to be made as the case may be. A more preferred range of the two-dimensional center line average roughness Ra of the layer A is 0.1 $\mu$m to 0.4 $\mu$m.

The Ra of the surface of the layer A can be controlled in a range from 0.1 $\mu$m to 0.6 $\mu$m by adjusting the content of the inorganic particles or organic particles. Especially a method of making the surface of the layer A contain approx. 0.5 mass% to approx. 1 mass% of particles with an average particle size of 0.1 to 10 $\mu$m is preferred. Further, in order to control the Ra of the surface of the layer A in a range from 0.1 $\mu$m to 0.6 $\mu$m without containing particles, a rubber casting drum can also be used as the cooling roll.

It is preferred that the multilayer sheet of this invention has a haze Ha of 1% to 15%. If Ha is kept in the abovementioned range, the article obtained by forming such a multilayer sheet is excellent in the visibility of the content and looks attractive as a commodity. Thus, the multilayer sheet of this invention can be preferably used as a packaging container or sheet with a high design property. If Ha is less than 1%, the sheet is likely to be flawed, and if such a multilayer sheet is used as a packaging container or sheet, the appearance may not be good as the case may be. If Ha is more than 15%, transparency is insufficient unpreferably in view of practical use. A more preferred Ha range of the multilayer sheet of this invention is 2% to 10%. Meanwhile, the lower limit of the haze is 1% as described before, but if the lower limit of haze is approx. 4%, it is adequate for applications where the packaging container or sheet is required to be transparent.

The haze Ha can be controlled in a range from 1% to 15% by changing the content of the polybutylene succinate-based resin, or by changing the ratio between the layer A and the layer B to control Xa, or by making the multilayer sheet contain inorganic particles or organic particles as required. More specifically, if Pa is kept in a range from 80 mass% to 97.5 mass% while Pb is kept in a range from 95 mass% to less than 100 mass%, Ha can be kept at 15% or lower. Further, Ha can be made closer to 1% by keeping Xa smaller in a range from 10 to 40%.

In the case where the multilayer sheet of this invention is used as a white sheet or the like, it is preferred that the whiteness degree of the multilayer sheet is 80% or more. If the whiteness degree of the multilayer sheet is less than 80% in the case where the multilayer sheet is used as a white layer, the whiteness, concealability and design property necessary as a magnetic stripe card, IC card or the like may not be able to assured as the case may be. The upper limit of the whiteness degree is not especially limited, and a higher whiteness degree is preferred. As the upper limit, approx. 100% is a realistic value that can be achieved, but approx. 98% is a sufficient level in the case where the use of the multilayer sheet as a magnetic stripe car, IC card or the like is considered.

In order to achieve 80% or more as the whiteness degree of the multilayer sheet of this invention, it is preferred that Pa is kept in a range from 60 mass% to less than 80 mass%, that Pb is kept in a range from 90 mass% to less than 95 mass%, and that the layer A and/or the layer B contains inorganic particles. Suitable examples of the inorganic particles include magnesium oxide, aluminum oxide, silicon oxide, titanium oxide, zinc oxide, calcium carbonate, barium sulfate, magnesium carbonate, calcium silicate, talc, clay, etc. If the layer A and/or the layer B contains such inorganic particles, excellent concealability can be obtained. As the inorganic particles, titanium oxide is preferred.

It is preferred that the average particle size of the inorganic particles used for keeping the whiteness degree at 80% or more is 10 $\mu$m or less. A more preferred range is 0.01 to 7 $\mu$m.

It is preferred that the content of the inorganic particles in the layer A is 2 mass% to 35 mass% with all the components of the layer A as 100 mass%. A more preferred range is 5 mass% to 20 mass%. If the content is less than 2 mass%, the contribution to the whiteness degree and concealability of the multilayer sheet may be small as the case may be, and if the content is more than 35 mass% on the other hand, the physical properties of the multilayer sheet may be impaired as the case may be.

It is preferred that the content of the inorganic particles in the layer B is 0.5 mass% to 10 mass% with all the components of the layer B as 100 mass%. A more preferred range is 1 mass% to 5 mass%. If the content is less than 0.5 mass%, the contribution to the whiteness degree and concealability of the multilayer sheet may be small as the case may be, and if the content is more than 10 mass% on the other hand, the plant degree of the sheet as a whole declines to lower the advantage of using the polylactic acid.

Meanwhile, in order to achieve a whiteness degree of 80% or more, it is preferred that the layer A and/or the layer B contains the inorganic particles, and it is not necessary that both the layer A and the layer B contain the inorganic particles.

When a layer containing a polylactic acid and a polybutylene succinate-based resin of this invention is obtained, a solution having the respective components dissolved in a solvent can be homogeneously mixed and subsequently the solvent can be removed to produce the intended composition. However, it is preferred to use a melt kneading method of producing the intended composition by melt-kneading the respective components, since the production method does not require the steps of dissolving the starting materials into a solvent and removing the solvent, and therefore is more practical.

The melt kneading method is not especially limited, and a usually used mixing machine such as a kneader, roll mill, Banbury mixer or single-screw or twin-screw extruder or the like can be used. Among them, in view of productivity, it is preferred to use a single-screw or twin-screw extruder.

Further, the order of mixing the components is not especially limited, and for example, a method of dry-blending a polylactic acid and a polybutylene succinate-based resin and subsequently subjecting the mixture to a melt kneading machine or a method of preparing a masterbatch by melt-kneading a polylactic acid and a polybutylene succinate-based resin beforehand and subsequently melt-kneading the masterbatch and the polylactic acid, or the like can be used. Further, as required, a method of melt-kneading other components simultaneously or a method of preparing a masterbatch by melt-kneading a polylactic acid and other additives and subsequently melt-kneading the masterbatch and the polylactic acid can also be used.

The method for producing the multilayer sheet of this invention is explained below specifically.

The polylactic acid in this invention can be obtained, for example, by the following method. As the starting materials, L-lactic acid or D-lactic acid as a main component and the aforementioned hydroxycarboxylic acid other than the lactic acid component can be used together. Further, a cyclic ester as an intermediate product of a hydroxycarboxylic acid such as a lactide or glycollide can also be used as a starting material. Furthermore, a dicarboxylic acid, glycol or the like can also be used.

A polylactic acid can be obtained by a method of directly dehydrating and condensing the abovementioned starting materials or a method of subjecting the abovementioned cyclic ester as an intermediate product to ring-opening polymerization. For example, in the case where direct dehydration-condensation is performed for producing the polylactic acid, a lactic acid or a lactic acid and a hydroxycarboxylic acid are azeotropically dehydrated and condensed preferably in the presence of an organic solvent, especially a phenyl ether-based solvent, and especially preferably water is removed from the solvent distilled out by azeotropy, to return the substantially anhydrous solvent into the reaction system, for performing polymerization in order to obtain a polymer with a high molecular weight.

Further, it is also known that a polymer with a high molecular weight can be obtained by subjecting a cyclic ester such as a lactide as an intermediate product to ring-opening polymerization under reduced pressure using a catalyst such as tin octylate. In this case, a polymer with a small lactide content can be obtained by using a method of adjusting the condition of removing water and a low molecular compound during heating under reflux in an organic solvent, a method of inhibiting the depolymerization reaction by inactivating the catalyst after completion of the polymerization reaction, a method of heat-treating the produced polymer, and the like.

The multilayer sheet of this invention can be obtained by an existing film production method such as a T-die casting method, inflation method or calender method, but a T-die casting method of melt-kneading and extruding a polylactic acid using a T-die is preferred. As an example of the T-die casting method, a polylactic acid with a moisture content of 400 ppm or less obtained, for example, by drying chips at 60 to 110˚C for 3 hours or more is used, and it is preferred that the cylinder temperature during melt-kneading is in a range from 150˚C to 240˚C. A more preferred range for preventing the deterioration of the polylactic acid is 200 to 220˚C. Further, it is preferred that the T-die temperature is also in a range from 200˚C to 220˚C, and after extrusion from the T-die, a cooling roll of 30 to 40˚C is used for cooling, to obtain a sheet with a thickness of approx. 0.1 mm to approx. 1.0 mm. Furthermore, it is preferred that the obtained sheet is subjected to any of various surface treatments for the purpose of enhancing the coating suitability. Surface treatment methods include corona discharge treatment, plasma treatment, flame treatment, acid treatment, etc., and any of the methods can be used. In view of continuous treatability, easy installation in the existing film forming equipment and simple treatment, corona discharge treatment is most preferred.

The thickness of the multilayer sheet of this invention is not especially limited, but considering the use as a formed article, the thickness is usually approx. 0.1 mm to approx. 1.0 mm. In the case where the multilayer sheet of this invention is used for containers and blister packs, the suitable thickness of the multilayer sheet is usually approx. 0.15 mm to approx. 0.7 mm. In the case where the multilayer sheet of this invention is used for printed and scored articles, the suitable thickness of the multilayer sheet is usually approx. 0.1 mm to approx. 0.4 mm.

Since the multilayer sheet of this invention is excellent in formability, it can be processed for use as formed articles. The formed articles obtained from the multilayer sheet of this invention include containers, blister packs, printed and scored articles, cards, clear files, etc. In the case where the multilayer sheet is used for an application requiring transparency, the existing printing and scoring machine can be used, and since the transparent sheet can be scored, it is suitable for clear cases, desk calendar cases and clear files. On the other hand, in the case where the multilayer sheet is used for an application requiring whiteness, it is suitable for cards.

EXAMPLES

This invention is described below in detail in reference to examples, but is not limited thereto or thereby.

[Methods of measurement and evaluation]

The measurement and evaluation in the examples were performed under the following conditions.

(1) Sheet thickness

The thickness of a sheet was measured at 10 points across the entire width using a microgauge, to obtain the mean value t (mm) of the values of the 10 points as the thickness of the sheet.

(2) Impact resistance: Impact value (kN·m/mm)

A film impact tester (produced by Toyo Seiki Seisaku-Sho, Ltd.) was used to measure the impact value in an atmosphere of 23˚C temperature and 65% RH using a semi-spherical impact head with a diameter of 1/2 inch. A film sample of 100 mm x 100 mm was prepared, and measurement was made five times at one level. Further, the impact value of each time was divided by the thickness of the test sample, to obtain an impact value per unit thickness. The mean value of five times of measurement was obtained. The thickness of a sample was measured using a digital micrometer. Meanwhile, in the case of a sheet with a layer A as only one of the outermost layers, the sample was set in such a manner that impact might be applied to the sheet from the side of the layer A.

If the impact value is 2.3 kN·m/mm or more, the sheet can be practically used as a sheet to be formed, since neither cracking nor burring occurs in the punched portion of the sheet.

(3) Haze Ha value (%)

The haze value was measured according to JIS K 7105 (1981) using a haze meter HGM-2DP (produced by Suga Test Instruments Co., Ltd.). The measurement was made three times at one level, and the mean value of three times of measurement was obtained. Meanwhile, in the case of a sheet with a layer A as only one of the outermost layers, the sample was set in such a manner that light might fall on the side of the layer A.

(4) Transparency

The value measured as the haze Ha value of (3) was evaluated according to the following criterion.
Double circle (excellent) : Multilayer sheet with Ha of 10% or less Single circle (good): Multilayer sheet with Ha of more than 10% to 15%
Triangle (other): Multilayer sheet with Ha of more than 15%

(5) Whiteness degree

The surface of the layer A side was measured using a spectrophotometric color difference meter SE-2000 (produced by Nippon Denshoku Industries Co., Ltd.), to obtain the L, a, b values, and the whiteness degree was obtained from the following formula according to JIS L 1015 (1999) C method.

$$\text{Whiteness degree (\%)} = 100 - [(100 - L)^2 + a^2 + b^2]^{1/2}$$

Measurement was made three times at one level, and the mean value was obtained from the three times of measurement.

(6) Center line average roughness: Ra

A two-dimensional center line average roughness (Ra) was measured using a universal surface shape profiler SE-3FA (produced by Kosaka Laboratory Ltd.) according to JIS B 0601 (2001). The measuring conditions were 2 $\mu$m stylus tip radius, 0.7 mN measuring force, 25 mm measuring length, and 0.08 cutoff. Meanwhile, in the case of a sheet with layers A as both the outermost layers, the center line average roughness values of both the surfaces were measured, and the larger value was employed.

(7) Blocking resistance

Ten sheets were stacked, and a load of 4 kg was applied from above at 40˚C for 24 hours, and after completion of the treatment, the sheet peelability was observed. Meanwhile, in the case of a sheet with a layer A as only one of the outermost layers, the sheets were overlaid in such a manner that the different surfaces might face each other.
Single circle (good) : All the sheets could be easily peeled without any practical problem.
Triangle (passable): Sheets could be peeled without any practical problem.
Cross (no good) : Blocking occurred at the time of peeling, or some portions were hard to peel, not allowing practical use.

(8) Rule bendability

A scoring rule was applied to a sheet, to score a line along which the sheet was bent, and the sheet was bent and unbent along the line five times, to observe the bent portion. Meanwhile, in the case of a sheet with a layer A as only one of the outermost layers, the scoring rule was applied from the layer A side. Single circle (good): At the bent portion, breakage, cracking and whitening did not occur without any problem.
Cross (no good): At the bent portion, breakage, cracking and whitening occurred.

(9) Plane orientation degree ∆P

An automatic birefringence meter KOBRA-21ADH produced by Oji Scientific Instruments was used to obtain birefringence values Δx, Δy and Δz of a sheet sample in three major axis directions, and from the relations of Δx = γ - β, Δy = γ - α and Δz = α - β (γ ≥ β, α is the refractive index of the sheet in the thickness direction), the plane orientation degree ΔP was obtained from the following formula. Meanwhile, in the case of a sheet with a layer A as only one of the outermost layers, the sample was set in such a manner that light might fall on the sheet from the side of the layer A.

$$\Delta P = \{(\gamma + \beta)/2\} - \alpha = (\Delta y - \Delta z)/2$$

(10) Average particle size

An ultra-thin section was prepared using a microtome in such a manner that the cross section of a multilayer sheet might be a sample surface, and Pt-Pd was ion-sputtered to the sample surface, for preparing a sample. A scanning electron microscope S-800 produced by Hitachi, Ltd. was used to observe and photograph a specific layer of the sample surface at a magnification of 5,000x. An arbitrarily selected image of 50 mm x 50 mm in the photograph was analyzed, to obtain the maximum diameters of ten particles. The diameters were averaged to obtain the average particle size of the particles in the layer measured.

(11) Layer ratio

An ultra-thin section was prepared using a microtome in such a manner that the cross section of a multilayer sheet might be a sample surface, and Pt-Pd was ion-sputtered to the sample surface, to prepare a sample. A scanning electron microscope S-800 produced by Hitachi, Ltd. was used to observe and photograph the sample surface at a magnification of 250x. The thickness ratio of respective layers was measured on the photograph.

(12) Plant degree of a multilayer sheet

The content of the polylactic acid (plant degree) with the entire multilayer sheet as 100 mass% was obtained from the polylactic acid contents (wt%) of the respective layers, layer configuration and thickness ratio of the multilayer sheet, and the plant degree was evaluated according to the following criterion. Double circle (excellent) : The plant degree was 90 mass% or more. Single circle (good): The plant degree was 80 mass% to less than 90 mass%. Cross (no good): The plant degree was less than 80 mass%.

(13) Evaluation of formed articles

An obtained sheet was punched or bent, and the practical performance was evaluated according to the following criteria.
Punching: A prepared sheet was cured at room temperature of 23°C for 24 hours, and a Thomson blade was used to punch the sheet from the layer A side.
Single circle (good) : The punched sheet could be used without any practical problem.
Cross (no good) : Cracking or burring occurred to raise a practical problem, not allowing the use of the punched sheet.
Bending: A prepared sheet was heated to 80°C and bent at an angle of 90°.
Single circle (good): The bent sheet could be used without any practical problem.
Cross (no good): Whitening occurred at the bent portion, or the sheet could not be bent at an angle of 90°, to raise a practical problem, not allowing the use of the bent sheet.

[Polylactic acid used]

(PLA-1):

Poly-L-lactic acid resin with a mass-average molecular weight of 220,000 in terms of PMMA and a melting point of 150°C and with a poly-D-lactic acid content of 5.0 mol% (produced by Nature Works)
[Polybutylene succinate-based resins used]

(PB-1):

Polybutylene succinate resin (trade name "GsPla" FZ91PD produced by Mitsubishi Chemical Corporation)

(PB-2):

Polybutylene succinate resin (trade name "GsPla" FZ71PD produced by Mitsubishi Chemical Corporation)

(PB-3) :

Polybutylene succinate·adipate-based resin (trade name "Bionole" #3003 produced by Showa Highpolymer Co., Ltd.)
[Masterbatches of inorganic particles used]

(D-1):

Masterbatch (average particle size of silica: 3.2 $\mu$m) based on silica (10 mass% per 100 mass% of the masterbatch)·PLA-1 (90 mass% per 100 mass% of the masterbatch)

(D-2) :

Masterbatch (average particle size of titanium oxide: 0.2 $\mu$m) based on titanium oxide (25 mass% per 100 mass% of the masterbatch)·ethylene-bis-stearic acid (2 mass% per 100 mass% of the masterbatch)·PLA-1 (73 mass% per 100 mass% of the masterbatch)

[Preparation of polylactic acid-based resin films]

(Example 1)

The polylactic acid (PLA-1) and the polybutylene succinate-based resin (PB-1) were supplied into vented twin-screw extruders at a ratio of 90 : 10 for layers A, and the polylactic acid (PLA-1) and the polybutylene succinate-based resin (PB-1) were supplied into another vented twin-screw extruder at a ratio of 98 : 2 for a layer B. While the gas was released from the respective vacuum vents, melt kneading was performed, and the respective mixtures were co-extruded from the respective T-dies set at a die temperature of 220˚C. The respective layers were cooled and solidified between metallic casting drums with the surface temperature adjusted to 40˚C, to prepare a non-oriented sheet with a thickness of 0.35 mm consisting of layer A/layer B/layer A = 10 : 80 : 10.
The evaluation results of the obtained sheet are shown in Table 1.
[Table 1-1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Mixing ratio of layer A | Polylactic acid | Component used | PLA-1 | PLA-1 | PLA-1 | PLA-1 | PLA-1 | PLA-1 | PLA-1 | PLA-1 | PLA-1 | PLA-1 |
| | | mass% | 90 | 80 | 90 | 92 | 85 | 60 | 90 | 90 | 95 | 95 |
| | Polybutylene succinate-based resin | Component used | PB-1 | PB-1 | PB-2 | PB-3 | PB-2 | PB-2 | PB-2 | PB-1 | PB-2 | PB-2 |
| | | mass% | 10 | 10 | 5 | 5 | 10 | 10 | 10 | 10 | 5 | 5 |
| | Masterbatch of inorganic particles | Component used | - | D-1 | D-1 | D-1 | D-1 | D-1 | - | - | - | - |
| | | mass% | | - 10 | 5 | 3 | 5 | 30 | - | - | - | - |
| Mixing ratio of layer B | Polylactic acid | Component used | PLA-1 | PLA-1 | PLA-1 | PLA-1 | PLA-1 | PLA-1 | PLA-1 | PLA-1 | PLA-1 | PLA-1 |
| | | mass% | 98 | 98 | 98 | 99 | 99 | 98 | 99 | 98 | 98 | 98 |
| | Polybutylene succinate-based resin | Component used | PB-1 | PB-1 | PB-2 | PB-3 | PB-2 | PB-2 | PB-2 | PB-1 | PB-2 | PB-2 |
| | | mass% | 2 | 2 | 2 | 1 | 1 | 2 | 2 | 1 | 2 | 2 |
| Mixing ratio of layer C | Polybutylene succinate-based resin | Component used | - | - | - | - | - | - | - | - | - | PLA-1 |
| | | mass% | - | - | - | - | - | - | - | - | - | 100 |
| Mass percentage Pa of polylactic acid of layer A (mass%) | | | 90.0 | 89.0 | 94.5 | 94.7 | 89.5 | 87.0 | 90.0 | 90.0 | 95.0 | 95.0 |
| Mass percentage Pb of polylactic acid of layer B (mass%) | | | 98.0 | 98.0 | 98.0 | 99.0 | 99.0 | 98.0 | 99.0 | 98.0 | 98.0 | 98.0 |
| Thickness rate Xa of layer A to the entire sheet thickness (%) | | | 20 | 10 | 10 | 20 | 20 | 20 | 20 | 40 | 40 | 30 |
| Layer configuration (both the end layers A are equal in thickness) | | | A/B/A | A/B/A | A/B/A | A/B/A | A/B/A | A/B/A | A/B/A | A/B/A | A/B/A | A/B/C |
| Layer ratio | | | 10/80/10 | 5/90/5 | 5/90/5 | 10/80/10 | 10/80/10 | 10/80/10 | 10/80/10 | 20/60/20 | 20/60/20 | 30/60/10 |

EP 2 407 305 A1

12

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Sheet thickness: t (mm) | | 0.35 | 0.35 | 0.35 | 0.35 | 0.33 | 0.33 | 0.35 | 0.15 | 0.20 | 0.22 |
| Plane orientation degree: $\Delta P$ | | 0.0001 | 0.0006 | 0.0005 | 0.0008 | 0.0010 | 0.0010 | 0.0007 | 0.0010 | 0.0018 | 0.0015 |
| Impact value: (kN·m/mm) | | 2.5 | 2.5 | 2.4 | 2.4 | 2.8 | 2.6 | 3.0 | 3 | 2.8 | 2.5 |
| Haze: Ha (%) | | 12 | 14 | 4 | 6 | 8 | 28 | 12 | 8 | 8 | 7 |
| Transparency | | ○ | ○ | ◎ | ◎ | ◎ | △ | ○ | ◎ | ◎ | ◎ |
| Center line average roughness: Ra ($\mu$m) | | 0.08 | 0.23 | 0.20 | 0.12 | 0.25 | 0.58 | 0.38 | 0.26 | 0.30 | 0.28 |
| Blocking resistance | | △ | ○ | ○ | ○ | ○ | ○ | ○ | ○ | ○ | ○ |
| Rule bendability | | ○ | ○ | ○ | ○ | ○ | ○ | ○ | ○ | ○ | ○ |
| Plant degree | | ◎ | ◎ | ◎ | ◎ | ◎ | ◎ | ◎ | ◎ | ◎ | ◎ |
| Casting drum | | Metallic roll | Metallic roll | Metallic roll | Metallic roll | Metallic roll | Rubber roll | Rubber roll | Rubber roll | Rubber roll | Rubber roll |
| Evaluation of formed article | Punching | - | - | - | - | ○ | - | ○ | ○ | - | - |
| | Bending | | | | | ○ | | ○ | ○ | | |

[Table 1-2]

| | | | Example 11 | Example 12 | Example 13 | Example 14 | Example 15 | Example 16 |
|---|---|---|---|---|---|---|---|---|
| Mixing ratio of layer A | Polylactic acid | Component used | PLA-1 | PLA-1 | PLA-1 | PLA-1 | PLA-1 | PLA-1 |
| | | mass% | 45 | 45 | 45 | 45 | 52 | 15 |
| | Polybutylene succinate-based resin | Component used | PB-2 | PB-2 | PB-2 | PB-2 | PB-2 | PB-2 |
| | | mass% | 10 | 10 | 10 | 10 | 3 | 20 |
| | Masterbatch of inorganic particles | Component used | D-1 | D-1 | D-1 | D-1 | D-1 | D-1 |
| | | mass% | 5 | 5 | 5 | 5 | 5 | 5 |
| | | Component used | D-2 | D-2 | D-2 | D-2 | D-2 | D-2 |
| | | mass% | 40 | 40 | 40 | 40 | 40 | 60 |
| Mixing ratio of layer B | Polylactic acid | Component used | PLA-1 | PLA-1 | PLA-1 | PLA-1 | PLA-1 | PLA-1 |
| | | mass% | 95 | 94 | 90 | 85 | 87 | 95 |
| | Polybutylene succinate-based resin | Component used | PB-2 | PB-2 | PB-2 | PB-2 | PB-2 | PB-2 |
| | | mass% | 1 | 2 | 2 | 7 | 5 | 1 |
| | Masterbatch of inorganic particles | Component used | D-2 | D-2 | D-2 | D-2 | D-2 | D-2 |
| | | mass% | 4 | 4 | 8 | 8 | 8 | 4 |
| Mass percentage Pa of polylactic acid of layer A (mass%) | | | 78.7 | 78.7 | 78.7 | 78.7 | 85.7 | 63.3 |
| Mass percentage Pb of polylactic acid of layer B (mass%) | | | 97.9 | 96.9 | 95.8 | 90.8 | 92.8 | 97.9 |
| Thickness rate Xa of layer A to the entire sheet thickness (%) | | | 20 | 30 | 20 | 40 | 20 | 10 |
| Layer configuration (both the end layers A are equal in thickness) | | | A/B/A | A/B/A | A/B/A | A/B/A | A/B/A | A/B/A |
| Layer ratio | | | 10/80/10 | 15/70/15 | 10/80/10 | 20/60/20 | 10/80/10 | 5/90/5 |
| Sheet thickness: t (mm) | | | 0.50 | 0.25 | 0.25 | 0.25 | 0.25 | 0.25 |
| Plane orientation degree: ΔP | | | 0.0008 | 0.0005 | 0.0006 | 0.0012 | 0.0006 | 0.0007 |
| Impact value: (kN·m/mm) | | | 2.3 | 2.5 | 2.4 | 3 | 2.3 | 2.3 |
| Whiteness degree (%) | | | 85 | 91 | 90 | 97 | 90 | 83 |
| Center line average roughness: Ra (μm) | | | 0.23 | 0.20 | 0.26 | 0.21 | 0.26 | 0.3 |
| Blocking resistance | | | ○ | ○ | ○ | ○ | ○ | ○ |
| Rule bendability | | | ○ | ○ | ○ | ○ | ○ | ○ |
| Plant degree | | | ◎ | ◎ | ◎ | ○ | ◎ | ◎ |
| Casting drum | | | Metallic roll | Metallic roll | Metallic roll | Metallic roll | Metallic roll | Metallic roll |

(continued)

| | | Example 11 | Example 12 | Example 13 | Example 14 | Example 15 | Example 16 |
|---|---|---|---|---|---|---|---|
| Evaluation of formed article | Punching | - | - | ○ | ○ | - | - |
| | Bending | | | ○ | ○ | | |

[Table 1-3]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Mixing ratio of layer A | Polylactic acid — Component used | PLA-1 | PLA-1 | PLA-1 | PLA-1 | PLA-1 | PLA-1 | PLA-1 | PLA-1 | PLA-1 |
| | Polylactic acid — mass% | 100 | 95 | 98 | 90 | 95 | 80 | 98 | 81 | 15 |
| | Polybutylene succinate-based resin — Component used | - | PB-1 | PB-1 | PB-2 | PB-1 | PB-2 | PB-2 | PB-2 | PB-2 |
| | Polybutylene succinate-based resin — mass% | - | 5 | 2 | 5 | 5 | 20 | 2 | 10 | 40 |
| | Masterbatch of inorganic particles — Component used | - | - | - | D-1 | D-1 | - | - | D-1 | D-1 |
| | Masterbatch of inorganic particles — mass% | - | - | - | 5 | 5 | - | - | 5 | 5 |
| | Masterbatch of inorganic particles — Component used | - | - | - | - | - | - | - | D-2 | D-2 |
| | Masterbatch of inorganic particles — mass% | - | - | - | - | - | - | - | 4 | 40 |
| Mixing ratio of layer B | Polylactic acid — Component used | - | - | PLA-1 | PLA-1 | PLA-1 | PLA-1 | PLA-1 | PLA-1 | PLA-1 |
| | Polylactic acid — mass% | - | - | 99 | 98 | 98 | 99 | 100 | 98 | 72 |
| | Polybutylene succinate-based — Component used | - | - | PB-2 | PB-2 | PB-2 | PB-2 | - | PB-2 | PB-2 |
| | Polybutylene succinate-based — mass% | - | - | 1 | 2 | 2 | 1 | - | 2 | 20 |
| | Masterbatch of inorganic particles — Component used | - | - | - | - | - | - | - | - | D-2 |
| | Masterbatch of inorganic particles — mass% | - | - | - | - | - | - | - | - | 8 |
| | Masterbatch of inorganic particles — Component used | - | - | - | - | - | - | - | - | - |
| | Masterbatch of inorganic particles — mass% | - | - | - | - | - | - | - | - | - |
| Mass percentage Pa of polylactic acid of layer A (mass%) | | 100.0 | 95.0 | 98.0 | 94.5 | 94.5 | 80.0 | 98.0 | 88.4 | 48.7 |
| Mass percentage Pb of polylactic acid of layer B (mass%) | | - | - | 99.0 | 98.0 | 98.0 | 99.0 | 100.0 | 98.0 | 77.8 |
| Thickness rate Xa of layer A to the entire sheet thickness (%) | | 100 | 100 | 40 | 8 | 20 | 60 | 10 | 5 | 20 |

(continued)

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|
| Layer configuration (both the end layers A are equal in thickness) | Single layer A | Single | A/B/A | A/B/A | A/B/A | A/B/A | A/B/A | A/B/A | A/B/A |
| Layer ratio | - | - | 20/60/20 | 4/92/4 | 10/80/10 | 30/40/30 | 5/90/5 | 2.5/95/2.5 | 10/80/10 |
| Sheet thickness: t (mm) | 0.35 | 0.35 | 0.35 | 0.35 | 0.30 | 0.35 | 0.35 | 0.25 | 0.25 |
| Plane orientation degree: ΔP | 0.0003 | 0.0004 | 0.0006 | 0.0004 | 0.0124 | 0.0011 | 0.0009 | 0.0013 | 0.0016 |
| Impact value: (kN·m/mm) | 1.7 | 3.0 | 2.0 | 1.9 | 4.5 | 4 | 1.8 | 1.9 | 3.5 |
| Haze: Ha (%) | 2.2 | 25 | 7 | 6 | 20 | 22 | 20 | - | - |
| Transparency | ◎ | △ | ◎ | ◎ | △ | △ | △ | - | - |
| Whiteness degree (%) | - | - | - | - | - | - | - | 78 | 91 |
| Centerline average roughness: Ra (μm) | 0.01 | 0.02 | 0.01 | 0.21 | 0.31 | 0.34 | 0.84 | 0.35 | 0.24 |
| Blocking resistance | × | × | × | ○ | ○ | ○ | ○ | ○ | ○ |
| Rule bendability | X:Breakage | ○ | X:Breakage | X:Breakage | ○ | ×:Whitening | X:Breakage | X:Breakage | ○ |
| Plant degree | ◎ | ◎ | ◎ | ◎ | ◎ | ○ | ◎ | ◎ | × |
| Casting drum  Casting drum | Metallic roll | Metallic roll | Metallic roll | Metallic roll | Metallic roll | Rubber roll | Embossing | Metallic roll | Metallic roll |
| Evaluation of formed article — Punching | X:Cracking | - | - | X:Cracking | ○ | ○ | - | - | - |
| Evaluation of formed article — Bending | ○ | | | ○ | ×:90° bending not possible | ×:Whitening at bent portion | | | |

(Examples 2 to 5 and 11 to 16, Comparative Examples 1 to 4, 8 and 9)

Multilayer sheets were produced as described in Example 1, except that the polylactic acid, polybutylene succinate-based resin and masterbatch of inorganic particles constituting each layer, their mixing ratio of each layer, and the layer configuration and thickness ratio of each multilayer sheet were changed as shown in the tables.

The evaluation results of the obtained sheets are shown in the tables.

(Examples 6 to 10 and Comparative Example 6)

The polylactic acid, polybutylene succinate-based resin and masterbatch of particles constituting each layer, their mixing ratio of each layer, and the layer configuration and thickness ratio of each multilayer sheet were changed as shown in the tables. The respective components of each layer were supplied to each independent vented twin-screw extruder. While the gas was released from the respective vacuum vents, melt kneading was performed, and the respective mixtures were co-extruded from the respective T-dies set at a die temperature of 220˚C. The respective layers were cooled and solidified between a rubber casting drum and a metallic cooling casting drum cooled at 40˚C, to prepare a non-oriented sheet with a thickness of 0.35 mm.
The evaluation results of the obtained sheets are shown in the tables.

(Comparative Example 5)

The polylactic acid, polybutylene succinate-based resin and masterbatch of inorganic particles constituting each layer, their mixing ratio of each layer, and the layer configuration and thickness ratio of the multilayer sheet were changed as shown in Table 1-3. The respective components of each layer were supplied to each independent vented twin-screw extruder. While the gas was released from the respective vacuum vents, melt kneading was performed, and the respective mixtures were co-extruded from the respective T-dies set at a die temperature of 220˚C. The respective layers were cooled and solidified between a metallic casting drum and a metallic cooling casting drum cooled to 40˚C. The sheet was subsequently stretched by a sequential biaxial stretching method to 3.0 times in the machine direction and 3.4 times in the transverse direction at 80˚C, and heat-treated at 140˚C, to prepare a biaxially oriented sheet with a thickness of 0.30 mm.

The evaluation results of the obtained sheet are shown in Table 1-3.

(Comparative Example 7)

The polylactic acid and polybutylene succinate-based resin constituting each layer, the mixing ratio of each layer, and the thickness ratio of the sheet were changed as shown in Table 1-3, and the respective components of each layer were supplied to each independent vented twin-screw extruder. While the gas was released from the respective vacuum vents, melt kneading was performed, and the respective mixtures were co-extruded from the respective T-dies set at a die temperature of 220˚C. The respective layers were cooled and solidified between metallic cooling casting drums cooled to 40˚C, to prepare a sheet with a thickness of 0.35 mm. The sheet was embossed.

The evaluation results of the obtained sheet are shown in Table 1-3.

The multilayer sheets of Examples 1 to 10 were excellent in any three items or more among impact resistance, transparency, blocking resistance, rule bendability and plant degree, and especially Examples 3, 5, 7 and 8 were excellent.
Further, the multilayer sheets of Examples 11 to 16 were excellent in any three items or more among impact resistance, whiteness degree, blocking resistance, rube bending and plant degree, and especially Examples 12 and 14 were excellent.
On the other hand, the comparative examples were inferior to the examples in any one item or more among impact resistance, blocking resistance, rule bendability and plant degree, and were clearly different from the examples.

[Preparation of formed articles]

The multilayer sheets obtained in Examples 5, 7 and 8 and Comparative Examples 1, 4, 5 and 6 were punched or bent. The evaluation results of processing are shown in the tables.

**Claims**

1.  A multilayer sheet comprising at least three layers, including a layer A as at least one of the outermost layers and a layer B as an inner layer, in which
    the layer A contains a polylactic acid and a polybutylene succinate-based resin, wherein the polylactic acid is contained by 60 mass% to 97.5 mass% with all the components of the layer A as 100 mass% (hereinafter the mass percentage of the polylactic acid with all the components of the layer A as 100 mass% is referred to as "Pa"), and the rate Xa of the thickness of the layer A is 10 to 40% with the entire thickness of the multilayer sheet as 100%;
    the layer B contains a polylactic acid and a polybutylene succinate-based resin, wherein the polylactic acid is contained by 90 mass% to less than 100 mass% with all the components of the layer B as 100 mass% (hereinafter the mass percentage of the polylactic acid with all the components of the layer B as 100 mass% is referred to as "Pb"); and
    the plane orientation degree ΔP is 0 to 0.002.

2.  A multilayer sheet, according to claim 1, wherein the aforementioned Pb is larger than the aforementioned Pa.

3.  A multilayer sheet, according to claim 1 or 2, wherein the two-dimensional center line average roughness Ra of the surface of the aforementioned layer A is 0.1 μm to 0.6 μm.

4.  A multilayer sheet, according to any one of claims 1 through 3, wherein the haze Ha (%) is 1% to 15%.

5.  A multilayer sheet, according to any one of claims 1 through 3, wherein the whiteness degree is 80% or more.

6.  A formed article composed of the multilayer sheet as set forth in any one of claims 1 through 5.

<table>
<tr><td colspan="2" align="center">**INTERNATIONAL SEARCH REPORT**</td><td colspan="2">International application No.<br>PCT/JP2010/052708</td></tr>
</table>

| A. CLASSIFICATION OF SUBJECT MATTER |
|---|
| *B32B27/36*(2006.01)i, *C08L67/02*(2006.01)i, *C08L67/04*(2006.01)i, *C08L101/16* (2006.01)n |

According to International Patent Classification (IPC) or to both national classification and IPC

| B. FIELDS SEARCHED |
|---|
| Minimum documentation searched (classification system followed by classification symbols)<br>B32B1/00-43/00, C08L67/02, C08L67/04, C08L101/16 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | WO 2007/063864 A1 (Toray Industries, Inc.),<br>07 June 2007 (07.06.2007),<br>claims; paragraphs [0020] to [0038],<br>[0061] to [0064], [0074] to [0076],<br>[0093] to [0098], [0128] to [0130], [0138],<br>[0148], [0153] to [0156]<br>& EP 1942001 A1<br>paragraphs [0020] to [0038], [0061] to [0064],<br>[0074] to [0076], [0093] to [0098],<br>[0128] to [0130], [0138], [0148],<br>[0156] to [0159]<br>& US 2009/0169844 A    & KR 10-2008-0073724 A<br>& CN 101336167 A | 1–6 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>16 March, 2010 (16.03.10) | Date of mailing of the international search report<br>23 March, 2010 (23.03.10) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/052708 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-155207 A (Toray Industries, Inc.), 28 May 2002 (28.05.2002), claims (Family: none) | 1-6 |
| A | JP 2005-2174 A (Toray Industries, Inc.), 06 January 2005 (06.01.2005), claims; paragraphs [0045] to [0060] (Family: none) | 1-6 |

Form PCT/ISA/210 (continuation of second sheet) (July 2009)

**EP 2 407 305 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9111107 A
- JP 2004002776 A
- JP 2003170560 A
- JP 2006305992 A